# EUROPÄISCHE PATENTANMELDUNG

(11) **EP 0 965 510 A1**
(43) Veröffentlichungstag der Anmeldung: **22.12.1999**
(21) Anmeldenummer: 99111047.9
(22) Anmeldetag: 14.06.1999
(51) Int. Cl.: B61C 9/38

(54) **Getriebegehäuse für Schienenfahrzeuge**

(30) Priorität: 20.06.1998 DE 19827583
(71) Anmelder: ZF FRIEDRICHSHAFEN Aktiengesellschaft, 88038 Friedrichshafen (DE)
(72) Erfinder: Miller, Martin, 88048 Friedrichshafen (DE); Eichinger, Johann, 96114 Friesen (DE)

(57) **Zusammenfassung**

Das Getriebegehäuse ist aus zwei Gehäuseabschnitten zusammengesetzt, zwischen denen eine Trennebene verläuft. Der eine Gehäuseabschnitt (10) ist derart ausgebildet, daß er den Antriebsteil aufnimmt, während der andere Gehäuseabschnitt (9) derart ausgebildet ist, daß er den Antriebsteil des Getriebes aufnimmt.

## Beschreibung

Die vorliegende Erfindung betrifft ein Getriebegehäuse für Schienenfahrzeuge, das aus zwei Gehäuseabschnitten zusammengesetzt ist, nach dem Oberbegriff des Anspruchs 1.

Es ist üblich, für jedes Getriebe für Schienenfahrzeuge ein eigenes Getriebegehäuse zu entwerfen und auszulegen. Bei der Vielzahl von Schienenfahrzeugen führt dies zu einer großen Anzahl unterschiedlicher Getriebegehäuse und damit zu hohen Herstellungskosten und Lagerhaltungskosten.

In der DE 23 26 146 wurde bereits ein aus verschiedenen Elementen bestehender Bausatz für ein schaltbares Zwischengetriebe für Fahrzeuge und fahrbare Maschinen vorgeschlagen. Die darin beschriebenen Bauteile bestehen zum einen aus einem Hauptelement, in dem mehrere Wellen mit ineinander kämmenden Zahnrädern gelagert sind und das eine Öffnung mit einem umlaufenden Befestigungsflansch aufweist sowie aus einem Sekundärelement, dessen oberes und unteres Ende offen ausgebildet ist sowie aus einem weiteren Element, das ein Lagerstück mit einer Öffnung aufweist, so daß eine Befestigung am Gehäuse des Hauptelementes oder des Sekundärelementes ermöglicht wird. Ein weiteres Element besteht aus einem Gehäuse mit zwei sich gegenüberliegenden Öffnungen, während noch ein weiteres Element für ein Wellenende mit einem Anschluß für einen Tachometer ausgebildet sein kann und das ähnlich wie das vierte Element ausgebildet ist. Noch ein weiteres Element des Bausatzes ist ein Gehäusedeckel, der die Tiefe und Weite eines Flansches aufweist, damit er eine der drei Öffnungen des Hauptelementes und des Sekundärelementes verschließen kann. Ein anderes Element, mit dem seitliche Durchbrüche in den anderen Elementen verschließbar sind, wenn diese nicht durch einzelne Elemente des Bausatzes besetzt sind, ist erforderlich.

Diese Vielzahl von Elementen dient zur Zusammenstellung verschiedenster Getriebegehäuse für Lastkraftwagen oder fahrbare Maschinen. Es können auch verschiedene Zwischengetriebe mit verschiedenen An- und Abtrieben eingebaut werden, wobei als Beispiele Abzweiggetriebe mit Trennmöglichkeit, zweiwellige Getriebe, in einer Reihe angeordnete Trenngetriebe oder fünfstufige Getriebe genannt sind. Dieser bekannte Bausatz weist noch eine Vielzahl von Einzelteilen auf, die zu den unterschiedlichen Getriebegehäusen in unterschiedlicher Zusammensetzung vereinigt werden müssen. Herstellungskosten und Aufwand für Lagerhaltung werden dadurch nur geringfügig reduziert.

Es sind ferner Getriebegehäuse bekanntgeworden, die aus zwei Gehäuseabschnitten bestehen, wobei die beiden Gehäuseabschnitte entweder durch eine horizontale oder vertikale Trennebene (z. B. EP 0 675 301 B1) oder durch eine vertikale Trennebene in Längsrichtung voneinander getrennt sind. Derartige Getriebegehäuse sind bezüglich des Achsabstandes invariabel und nur begrenzt für Getriebe mit unterschiedlichen Übersetzungen verwendbar.

Es sind auch ungeteilte Getriebegehäuse bekanntgeworden, die nur Lagerdeckel aufweisen, so daß nach Einsetzen und Zusammenbau des Getriebes das Getriebegehäuse eine große Steifigkeit aufweist, wobei das Gehäuse jedoch nicht für mehrere Getriebe geeignet ist.

Die meisten Getriebegehäuse sind nur für einen einzigen Einsatzzweck geeignet oder bestehen, wie eingangs ausgeführt, aus einer Vielzahl von Einzelelementen mit entsprechendem Montageaufwand.

Aufgabe der vorliegenden Erfindung ist es, ein Getriebegehäuse für Schienenfahrzeuge zu schaffen, das für unterschiedliche Getriebe geeignet ist, d. h. daß die einzubauenden Getriebe unterschiedliche Achsabstände, Übersetzungen und Zahnradpaarungen aufweisen dürfen. Außerdem sollen unterschiedliche Anschlußkombinationen für An- und Abtrieb ermöglicht werden.

Ausgehend von einem Getriebegehäuse der eingangs näher genannten Art, erfolgt die Lösung dieser Aufgabe, mit den im kennzeichnenden Teil des Anspruchs 1 angegebenen Merkmalen.

Erfindungsgemäß besteht das Getriebegehäuse also aus zwei Gehäuseabschnitten, deren Trennebene zwischen An- und Abtriebsachse vertikal oder mit beliebigem räumlichen Winkel verläuft, wobei der eine Gehäuseabschnitt derart ausgebildet ist, daß er den Antriebsteil des Getriebes aufnimmt und der andere Gehäuseabschnitt derart ausgestaltet ist, daß er den Abtriebsteil des Getriebes aufnimmt. Dies bedeutet, daß die beiden Gehäuseabschnitte unterschiedliche Abmessungen aufweisen, d. h. asymmetrisch zueinander ausgestaltet sind und eine gemeinsame Außenkontur nur an den miteinander zu verbindenden, die Trennebene bildenden Rändern aufweisen.

Eine weitere Variabilität des erfindungsgemäßen Getriebegehäuse wird dadurch erhalten, daß gemäß dem Unteranspruch Distanzstücke zwischen den beiden Gehäuseabschnitten eingesetzt werden können.

Wenn die an- und abtriebsseitigen Gehäuseabschnitte jeweils ein Teil eines Modulsystems sind, wobei die antriebsseitigen Gehäuseabschnitte für unterschiedliche Anbindungen des Motors und die abtriebsseitigen Gehäuseabschnitte für unterschiedliche Anbindungen des Abtriebs ausgebildet sind, wird eine hohe Variabilität erzielt.

Das erfindungsgemäße Getriebegehäuse bietet den Vorteil, daß Getriebe mit unterschiedlichen Achsabständen eingebaut werden können und daß nur maximal noch drei Komponenten erforderlich sind (zwei unterschiedliche Gehäuseabschnitte und gegebenenfalls ein Distanzstück); der den Abtriebsteil des Getriebes aufnehmende Gehäuseabschnitt kann sowohl für einstufige, einstufige mit Zwischenrad als auch für zweistufige Getriebe verwendet werden. Zum Zweck unterschiedlicher Anbindungen an den Motor des Schienenfahrzeugs können auch modifizierte, den Antrieb aufnehmende Gehäuseabschnitte eingesetzt werden. Der Motor kann beispielsweise direkt oder über eine Kupplung an das Antriebsgehäuse angeflanscht sein. Ein Antriebsgehäuse kann mit fest oder elastisch auf der Abtriebsachse angeordneten oder voll abgefederten Abtriebsgehäusen gepaart werden.

Unterschiedliche Übersetzungen können in Grenzen bei gleichem Achsabstand oder variablem Achsabstand durch Einsetzen eines (oder auch mehrerer) Distanzstücke untergebracht werden.

Im folgenden wird die Erfindung anhand schematischer Zeichnungen näher erläutert. Es zeigen:
- Fig. 1: ein herkömmliches Getriebegehäuse mit horizontaler Teilung;
- Fig. 2: ein herkömmliches Getriebegehäuse mit Längsteilung;
- Fig. 3: ein herkömmliches Getriebegehäuse ohne Teilung, aber mit Lagerdeckel, und
- Fig. 4: ein erfindungsgemäßes Getriebegehäuse.

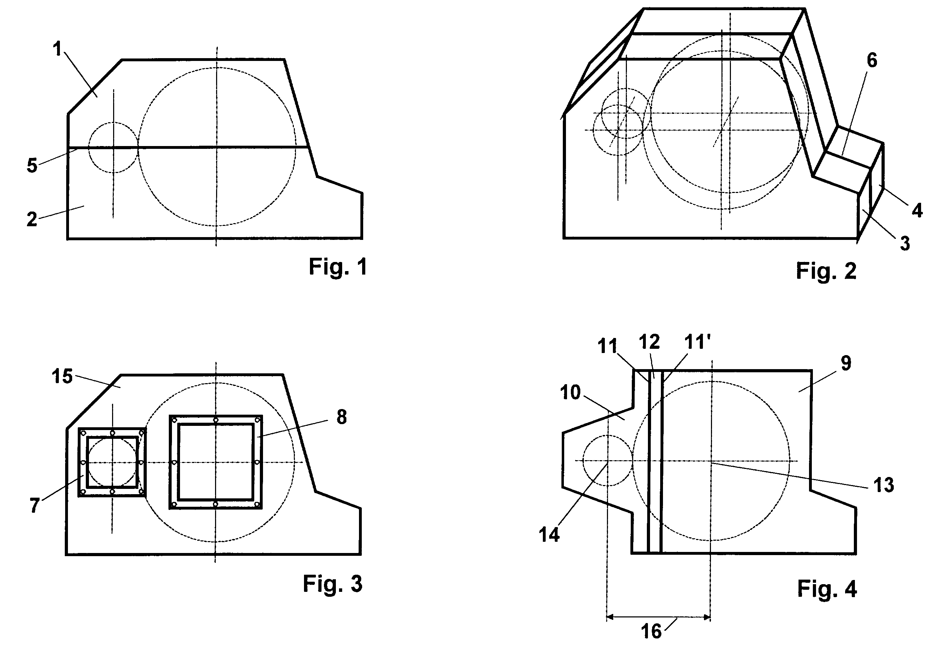

Das in Fig. 1 dargestellte bekannte Getriebegehäuse ist durch eine Trennebene 5 in einen oberen Gehäuseabschnitt 1 und einen unteren Gehäuseabschnitt 2 unterteilt. Das in Fig. 2 dargestellte bekannte Getriebegehäuse ist durch eine Längsebene 6 in zwei Gehäuseabschnitte 3, 4 unterteilt. Das in Fig. 3 dargestellte bekannte Getriebegehäuse weist keine Teilung auf, ist jedoch mit Lagerdeckeln 7, 8 versehen, durch die Einzelteile des Getriebes einsetzbar und montierbar sind.

Diese bekannten Getriebegehäuse sind invariabel bezüglich Achsabstand und nur begrenzt für Getriebe mit unterschiedlichen Übersetzungen einsetzbar.

Fig. 4 zeigt ein erfindungsgemäßes Getriebegehäuse, welches ebenfalls in zwei Gehäuseabschnitte 9, 10 unterteilt ist. Der Gehäuseabschnitt 9 ist dabei derart ausgestaltet, daß er den Abtriebsteil eines Getriebes aufnimmt, während der Gehäuseabschnitt 10 derart ausgestaltet ist, daß er den Antriebsteil des Getriebes aufnimmt. Mit 13 ist dabei die Achse der Abtriebswelle und mit 14 die Achse der Antriebswelle angedeutet.

Mit 12 ist ein Distanzstück bezeichnet, das zwischen den beiden Gehäuseabschnitten 9, 10 einsetzbar ist, so daß zwei Trennebenen 11, 11' gebildet werden. Das Distanzstück vergrößert den Abstand zwischen den beiden Gehäuseabschnitten und trägt damit unterschiedlichen Achsabständen 16 zwischen Abtriebsteil und Antriebsteil Rechnung. Statt einem Distanzstück 12 können selbstverständlich auch mehrere Distanzstücke nebeneinander angeordnet werden.

Es versteht sich, daß die Trennebene nicht zwangsläufig vertikal, d. h. normal zur Verbindungslinie zwischen An- und Abtriebsachse, verlaufen muß, sondern jeden beliebigen Raumwinkel einnehmen kann.
Die Trennebene kann auch eine der Achse schneiden, d. h., sie muß nicht vollständig zwischen An- und Abtriebsachse liegen.

### Bezugszeichen

- 1: Gehäuseabschnitt
- 2: Gehäuseabschnitt
- 3: Gehäuseabschnitt
- 4: Gehäuseabschnitt
- 5: Trennebene
- 6: Trennebene
- 7: Lagerdeckel
- 8: Lagerdeckel
- 9: Gehäuseabschnitt
- 10: Gehäuseabschnitt
- 11: Trennebene
- 12: Distanzstück
- 13: Achse
- 14: Achse
- 15: Gehäuse
- 16: Achsabstand

## Patentansprüche

1. Getriebegehäuse für Schienenfahrzeuge, das aus zwei Gehäuseabschnitten zusammengesetzt ist, zwischen denen eine Trennebene verläuft, dadurch **gekennzeichnet,** daß der eine Gehäuseabschnitt (10) derart ausgebildet ist, daß er den Antriebsteil des Getriebes aufnimmt und daß der andere Gehäuseabschnitt(9) derart ausgestaltet ist, daß er den Abtriebsteil des Getriebes aufnimmt.

2. Getriebegehäuse nach Anspruch 1, dadurch **gekennzeichnet,** daß zwischen den beiden Gehäuseabschnitten (9, 10) ein oder mehrere Distanzstücke (12) eingesetzt sind.

3. Getriebegehäuse nach Anspruch 1 oder 2, dadurch **gekennzeichnet,** daß jeder der Gehäuseabschnitte (9, 10) ein Teil eines Modulsystems ist, dessen Teile eine gemeinsame Außenkontur an den miteinander zu verbindenden, die Trennebene (11, 11') bildenden Rändern aufweisen, wobei die antriebsseitigen Gehäuseabschnitte (10) für unterschiedliche Anbindungen des Motors und die abtriebsseitigen Gehäuseabschnitte (9) für unterschiedliche Anbindungen des Abtriebs ausgebildet sind.
